(19) Europäisches Patentamt
European Patent Office
Office européen des brevets

(11) EP 3 618 266 A1

(12) EUROPÄISCHE PATENTANMELDUNG

(43) Veröffentlichungstag:
04.03.2020 Patentblatt 2020/10

(51) Int Cl.:
H02P 23/22 (2016.01)    F04D 29/66 (2006.01)

(21) Anmeldenummer: 18191133.0

(22) Anmeldetag: 28.08.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• Brandl, Konrad
  93107 Thalmassing (DE)
• Kauke, Michael
  50931 Köln-Lindenthal (DE)
• Zettner, Jürgen
  90587 Veitsbronn (DE)

(54) ERMITTLUNG EINER DREHZAHL EINES ROTORS DURCH SCHWINGUNGSANALYSE

(57) Eine rotatorische elektrische Maschine (1) wird mit einer vorbekannten Speisefrequenz (fF) mit elektrischer Energie versorgt. Eine Auswertungseinrichtung (11) nimmt ein Vibrationssignal (S) entgegen, das mittels eines an einem Stator (3) der elektrischen Maschine (1) angeordneten Schwingungssensors (10) generiert wird.

Die Auswertungseinrichtung (11) ermittelt anhand des zeitlichen Verlaufs des Vibrationssignals (S) eine Grundfrequenz (f0) des Vibrationssignals (S) und anhand der Grundfrequenz (f0) des Vibrationssignals (S) die Drehzahl (n) eines Rotors (2) der elektrischen Maschine (1).

FIG 5

**Beschreibung**

Die vorliegende Erfindung geht aus von einem Ermittlungsverfahren für eine Drehzahl eines Rotors einer rotatorischen elektrischen Maschine, die mit einer vorbekannten Speisefrequenz mit elektrischer Energie versorgt wird.

Die vorliegende Erfindung geht weiterhin aus von einer Auswertungseinrichtung zur Ermittlung einer Drehzahl eines Rotors einer rotatorischen elektrischen Maschine, die mit einer vorbekannten Speisefrequenz mit elektrischer Energie versorgt wird.

Die vorliegende Erfindung geht weiterhin aus von einer rotatorischen elektrischen Maschine, insbesondere einer Asynchronmaschine,

- wobei die elektrische Maschine einen Rotor und einen Stator aufweist,
- wobei die elektrische Maschine mit einer vorbekannten Speisefrequenz mit elektrischer Energie versorgt wird,
- wobei am Stator der elektrischen Maschine ein Schwingungssensor angeordnet ist, mittels dessen ein Vibrationssignal generiert wird.

Im Rahmen der allgemeinen Auswertung des Betriebs einer elektrischen Maschine ist es oftmals von Vorteil, zu wissen, zu welchen Zeiten die elektrische Maschine mit welchen Drehzahlen und/oder mit welcher Last betrieben wurde.

In manchen Fällen ist zumindest die Ermittlung der Drehzahl auch dann ohne weiteres möglich, wenn die elektrische Maschine nicht mit einem Lagegeber oder einem Drehzahlgeber ausgestattet ist. So ist beispielsweise die Ermittlung der Drehzahl ohne weiteres möglich, wenn die elektrische Maschine als Synchronmaschine ausgebildet ist und die Speisefrequenz, mit der die elektrische Maschine mit elektrischer Energie versorgt wird bekannt ist. Auch ist die Ermittlung der Drehzahl ohne weiteres möglich, wenn die elektrische Maschine über einen Umrichter mit elektrischer Energie versorgt wird. Insbesondere kann in diesem Fall innerhalb des Umrichters ein Rechenmodell hinterlegt sein, mittels dessen die Drehzahl der elektrischen Maschine rechnerisch ermittelt werden kann. Wenn hingegen die elektrische Maschine als Asynchronmaschine ausgebildet ist, direkt über das allgemeine elektrische Versorgungsnetz gespeist wird und nicht mit einem Lagegeber oder einem Drehzahlgeber ausgestattet ist, kann lediglich die Synchrondrehzahl ohne weiteres ermittelt werden. Die sich zu einer gegebenen Last - auch bei Leerlauf, also im lastfreien Zustand - einstellende Drehzahl der elektrischen Maschine kann hingegen nur dann ermittelt werden, wenn die elektrische Maschine mit einem Lagegeber oder einem Drehzahlgeber ausgestattet ist.

Ebenso kann bei einer umrichtergespeisten elektrischen Maschine über die Ansteuerung des Umrichters die Last auf relativ einfache Weise modellgestützt ermittelt werden. In anderen Fällen ist dies nicht ohne weiteres möglich. Dies gilt insbesondere auch im Falle einer direkt über das allgemeine elektrische Versorgungsnetz gespeisten Asynchronmaschine. Um insbesondere in einem derartigen Fall die Last ermitteln zu können, muss im Stand der Technik ein Lastsensor vorhanden sein. Derartige Lastsensoren - beispielsweise Dehnmessstreifen oder dergleichen - sind jedoch kostenintensiv.

Die Aufgabe der vorliegenden Erfindung besteht darin, Möglichkeiten zu schaffen, mittels derer eine Ermittlung der Drehzahl der elektrischen Maschine auch ohne Lagegeber oder Drehzahlgeber auf einfache und zuverlässige Weise möglich ist. Dies soll zwar nicht nur, aber insbesondere auch dann gelten, wenn die elektrische Maschine eine Asynchronmaschine ist und/oder die Speisung der elektrischen Maschine aus dem öffentlichen Versorgungsnetz erfolgt, also mit einer Speisefrequenz von 50 Hz oder 60 Hz.

Die Aufgabe wird durch ein Ermittlungsverfahren mit den Merkmalen des Anspruchs 1 gelöst. Vorteilhafte Ausgestaltungen des Ermittlungsverfahrens sind Gegenstand der abhängigen Ansprüche 2 bis 10.

Erfindungsgemäß wird ein Ermittlungsverfahren der eingangs genannten Art dadurch ausgestaltet,

- dass eine Auswertungseinrichtung ein mittels eines an einem Stator der elektrischen Maschine angeordneten Schwingungssensors generiertes Vibrationssignal entgegennimmt,
- dass die Auswertungseinrichtung anhand des zeitlichen Verlaufs des Vibrationssignals eine Grundfrequenz des Vibrationssignals ermittelt und
- dass die Auswertungseinrichtung anhand der Grundfrequenz des Vibrationssignals die Drehzahl des Rotors ermittelt.

Diese Vorgehensweise beruht auf der Erkenntnis, dass der Rotor der elektrischen Maschine in der Praxis eine - wenn oftmals auch nur geringe - Unwucht aufweist. Rotiert der Rotor, so erzeugt der Rotor aufgrund seiner Unwucht eine Vibration, also eine mechanische Schwingung. Mittels eines entsprechenden Sensors, beispielsweise mittels eines Beschleunigungssensors, kann ohne weiteres ein entsprechendes elektrisches Signal, nachfolgend Vibrationssignal genannt, generiert werden. Die Grundfrequenz des Vibrationssignals steht in einer linearen Beziehung zur Drehzahl des Rotors. Insbesondere besteht oftmals sogar eine 1:1-Beziehung zwischen der Grundfrequenz des Vibrationssignals und der Drehzahl des Rotors. Aus der Grundfrequenz des Vibrationssignals kann daher direkt auf die Drehzahl der elektrischen Maschine rückgeschlossen werden.

Der Schwingungssensor kann nach Bedarf angeordnet sein. Beispielsweise kann der Schwingungssensor in einem Lager oder in der Nähe eines Lagers der Rotorwelle angeordnet sein. Insbesondere eine Anordnung an einem Lagerschild ist oftmals von Vorteil. Alternativ kann der Schwingungssensor aber auch an einer anderen Stelle der elektrischen Maschine angeordnet sein, beispielsweise am Gehäuse der elektrischen Maschine.

Es ist möglich, im Rahmen der erfindungsgemäßen Drehzahlermittlung einen eigenständigen Schwingungssensor zu verwenden, also einen Schwingungssensor dessen Vibrationssignal ausschließlich für die darauf aufbauende Drehzahlermittlung verwendet wird. In vielen Fällen weist die elektrische Maschine jedoch aus anderen Gründen und zu anderen Zwecken bereits einen oder mehrere Schwingungssensoren auf. In diesem Fall kann das Vibrationssignal eines oder gegebenenfalls mehrerer dieser Schwingungssensoren zur Ermittlung der Drehzahl verwendet werden.

Die erfindungsgemäße Ermittlung der Drehzahl erfordert zwar eine Erfassung des Vibrationssignals über mehrere Perioden der Speisefrequenz. Dies ist jedoch unproblematisch, weil mittels der ermittelten Drehzahl nicht eine Lage- oder Drehzahlregelung der elektrischen Maschine erfolgen soll, sondern lediglich eine Langzeiterfassung des Betriebszustands der elektrischen Maschine.

Es ist möglich, dass das Ermittlungsverfahren jeweils nur einmal aufgrund eines bestimmten Ereignisses angestoßen wird, beispielsweise bei Erkennung eines extremen Betriebszustands oder auf Anforderung durch einen Bediener. Ebenso ist es jedoch möglich, das Ermittlungsverfahren permanent oder immer wieder auszuführen, beispielsweise jede Minute, nach jeweils 10 Minuten oder jede Stunde.

In einer bevorzugten Ausgestaltung bestimmt die Auswertungseinrichtung zunächst anhand der Speisefrequenz einen Frequenzbereich. Sodann ermittelt die Auswertungseinrichtung die Drehzahl des Rotors anhand der Grundfrequenz des Vibrationssignals. Diese Ermittlung erkennt die Auswertungseinrichtung jedoch nur dann als gültig an, wenn die Grundfrequenz des Vibrationssignals innerhalb des von der Auswertungseinrichtung bestimmten Frequenzbereichs liegt. Diese Ausgestaltung vermeidet insbesondere fehlerhafte Ermittlungen der Drehzahl.

Eine geeignete Bestimmung des Frequenzbereichs ist in der Regel ohne weiteres möglich. Beispielsweise kann die Auswertungseinrichtung oftmals die Speisefrequenz durch die Polpaarzahl der elektrischen Maschine dividieren und die so ermittelte Synchrondrehzahl (gegebenenfalls zuzüglich eines geringen Offsets) als Obergrenze des Frequenzbereichs verwenden und als Untergrenze des Frequenzbereichs das x-fache der Synchrondrehzahl verwenden, wobei x ein Wert ist, der geringfügig unterhalb von 1 liegt, beispielsweise bei 0,95 oder 0,96. Die Speisefrequenz selbst kann der Auswertungseinrichtung fest vorgegeben sein, parametriert sein oder von der Auswertungseinrichtung erfasst werden, beispielsweise durch Abgreifen eines Spannungssignals der elektrischen Versorgung der elektrischen Maschine.

Es ist möglich, dass die Auswertungseinrichtung die ermittelte Drehzahl des Rotors und/oder eine unter Verwertung der Drehzahl ermittelte abgeleitete Größe der elektrischen Maschine lediglich intern im Sinne einer Historie abspeichert. Vorzugsweise übermittelt die Auswertungseinrichtung jedoch die ermittelte Drehzahl des Rotors und/oder die unter Verwertung der Drehzahl ermittelte abgeleitete Größe der elektrischen Maschine über eine Anbindung an ein Rechnernetz an einen Rechner. Das Rechnernetz kann beispielsweise ein LAN oder das Internet sein. Der Rechner kann insbesondere in einer Cloud angeordnet sein und/oder ein Server sein. Aufgrund der Übermittlung an den Rechner ist insbesondere dort eine zentrale Auswertung möglich, beispielsweise auch unter zusätzlicher Heranziehung weiterer Daten, beispielsweise von anderen, gleichartigen elektrischen Maschinen.

Sofern die Auswertungseinrichtung anhand der Drehzahl des Rotors eine abgeleitete Größe der elektrischen Maschine ermittelt, kann diese Größe beispielsweise ein von dem Rotor der elektrischen Maschine und/oder eine von der elektrischen Maschine aufgenommene elektrische Leistung oder eine von der elektrischen Maschine abgegebene mechanische Leistung sein. Insbesondere diese Größen geben Aufschluss über die Belastung der elektrischen Maschine und den dadurch zu erwartenden Einfluss auf die Lebensdauer der elektrischen Maschine.

In manchen Fällen ist es möglich, dass die Auswertungseinrichtung die abgeleitete Größe der elektrischen Maschine ausschließlich anhand der ermittelten Drehzahl ermittelt. Die Auswertungseinrichtung benötigt zwar auch in diesem Fall weitere Parameter. Diese Parameter sind aber in diesem Fall der Auswertungseinrichtung fest vorgegeben. Es ist jedoch ebenso möglich, dass die Auswertungseinrichtung im Rahmen der Ermittlung der abgeleiteten Größe weitere Betriebsgrößen der elektrischen Maschine berücksichtigt. Beispielsweise können ein Schmierungszustand der elektrischen Maschine, eine Temperatur aus der Umgebung der elektrischen Maschine oder eine Temperatur innerhalb der elektrischen Maschine - beispielsweise der Statorwicklung - mit berücksichtigt werden. Dadurch ist eine bessere und genauere Ermittlung der abgeleiteten Größe möglich.

Eine besonders einfache und zuverlässige Ermittlung der Drehzahl des Rotors wird dadurch bewirkt,

- dass die Auswertungseinrichtung zum Ermitteln der Grundfrequenz des Vibrationssignals das Vibrationssignal und ein von einem frequenzsteuerbaren Oszillator abgegebenes, eine Oszillationsfrequenz aufweisendes Oszillationssignal zu einem Mischsignal mischt, welches einen Signalanteil mit der Summe von Grundfrequenz und Oszillationsfrequenz und einen Signalanteil mit der Differenz von Grundfrequenz und Oszillationsfrequenz enthält,

- dass die Auswertungseinrichtung die Oszillationsfrequenz anhand des Signalanteils mit der Differenz von Grundfrequenz und Oszillationsfrequenz nachführt, so dass die Oszillationsfrequenz der Grundfrequenz des Vibrationssignals angeglichen wird, und
- dass die Auswertungseinrichtung die Drehzahl des Rotors anhand der Oszillationsfrequenz des Oszillationssignals ermittelt.

Insbesondere ist dadurch auf einfache und zuverlässige Weise auch ein Nachführen der ermittelten Drehzahl des Rotors möglich, wenn sich die Drehzahl des Rotors ändert. Sowohl der Oszillator, der das Oszillationssignal erzeugt, als auch der Mischer, welcher das Mischsignal erzeugt, können nach Bedarf als Hardwarekomponenten oder in Software realisiert sein.

Die Ermittlung der Drehzahl ist besonders robust, wenn die Auswertungseinrichtung eine Tiefpassfilterung des Mischsignals vornimmt und einem Steuereingang des Oszillators, über den die Oszillationsfrequenz nachgeführt wird, das tiefpassgefilterte Mischsignal zuführt.

Vorzugsweise ist die Tiefpassfilterung, mittels derer die Auswertungseinrichtung das Mischsignal tiefpassfiltert, eine Biquadfilterung. Dadurch ist insbesondere eine einfache und robuste Tiefpassfilterung möglich, die nur wenig Speicherplatz und wenig Rechenzeit benötigt.

Die Ermittlung der Drehzahl wird noch robuster, wenn die Auswertungseinrichtung zur Ermittlung der Drehzahl des Rotors eine Tiefpassfilterung der Oszillationsfrequenz vornimmt.

Vorzugsweise ist auch die Tiefpassfilterung, mittels derer die Auswertungseinrichtung die Oszillationsfrequenz tiefpassfiltert, eine Biquadfilterung. Wie bei der Tiefpassfilterung des Mischsignals ist dadurch eine einfache und robuste Tiefpassfilterung möglich, die nur wenig Speicherplatz und wenig Rechenzeit benötigt.

Die Aufgabe wird weiterhin durch eine Auswertungseinrichtung mit den Merkmalen des Anspruchs 11 gelöst. Erfindungsgemäß ist die Auswertungseinrichtung derart ausgebildet, dass sie im Betrieb ein erfindungsgemäßes Ermittlungsverfahren ausführt.

Die Aufgabe wird weiterhin durch eine elektrische Maschine mit den Merkmalen des Anspruchs 12 gelöst. Erfindungsgemäß weist die elektrische Maschine eine erfindungsgemäße Auswertungseinrichtung auf, die das von dem Schwingungssensor generierte Vibrationssignal entgegennimmt, anhand des zeitlichen Verlaufs des Vibrationssignals eine Grundfrequenz des Vibrationssignals ermittelt und anhand der Grundfrequenz des Vibrationssignals eine Drehzahl des Rotors ermittelt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1     eine elektrische Maschine im Querschnitt,
FIG 2     die elektrische Maschine von FIG 1 in ihrer Gesamtheit einschließlich Last und Versorgung,
FIG 3     ein Frequenz-Last-Diagramm,
FIG 4     ein Schwingungsspektrum,
FIG 5     eine Auswertungsschaltung und
FIG 6     ein Tiefpassfilter.

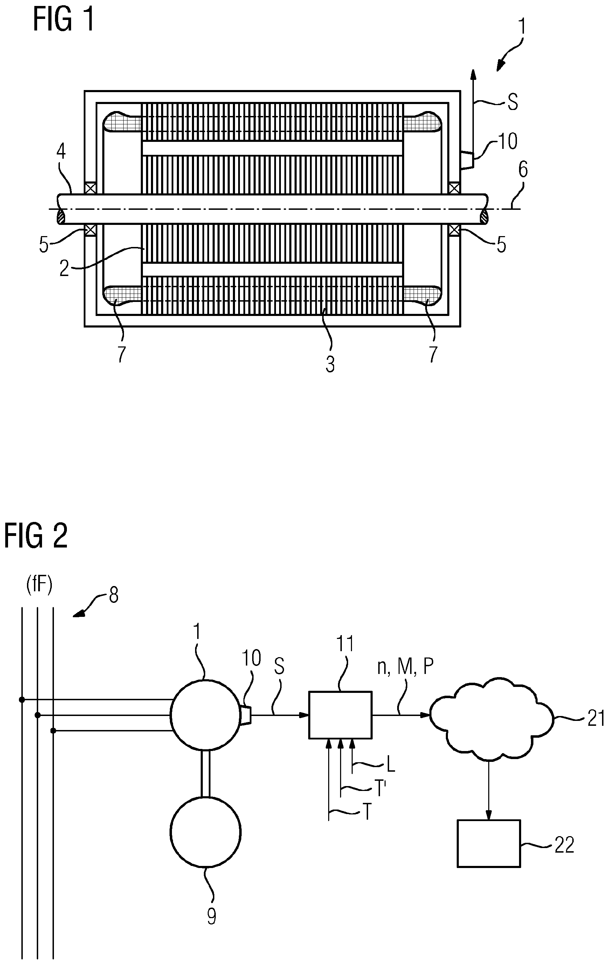

Gemäß FIG 1 weist eine rotatorische elektrische Maschine 1 einen Rotor 2 und einen Stator 3 auf. Der Rotor 2 ist auf einer Rotorwelle 4 angeordnet. Die Rotorwelle 4 ist in Lagern 5 gelagert, so dass die Rotorwelle 4 um eine Rotationsachse 6 rotierbar ist. Im Stator 3 ist insbesondere eine Statorwicklung angeordnet, wobei in FIG 1 nur die Wicklungsköpfe 7 der Statorwicklung erkennbar sind.

Die elektrische Maschine 1 - insbesondere die Statorwicklung - wird mit einer Speisefrequenz fF mit elektrischer Energie versorgt. Insbesondere kann die elektrische Maschine 1 entsprechend der Darstellung in FIG 2 direkt aus dem öffentlichen Versorgungsnetz 8 mit elektrischer Energie versorgt werden. Unabhängig davon, aus welcher Quelle die elektrische Maschine 1 mit elektrischer Energie versorgt wird, ist die Speisefrequenz fF jedoch vorbekannt. Beispielsweise beträgt die Speisefrequenz fF bei einer Speisung aus dem öffentlichen Versorgungsnetz 8 - je nach Netz 8 - meist 50 Hz oder 60 Hz. Prinzipiell ist aber auch eine Speisung mit einer anderen Speisefrequenz fS möglich. Die Speisefrequenz fF muss lediglich bekannt sein.

Die elektrische Maschine 1 treibt eine Last 9 an. Die Last 9 kann beispielsweise eine Mühle oder eine Pumpe sein. Es sind aber auch andere Lasten 9 denkbar.

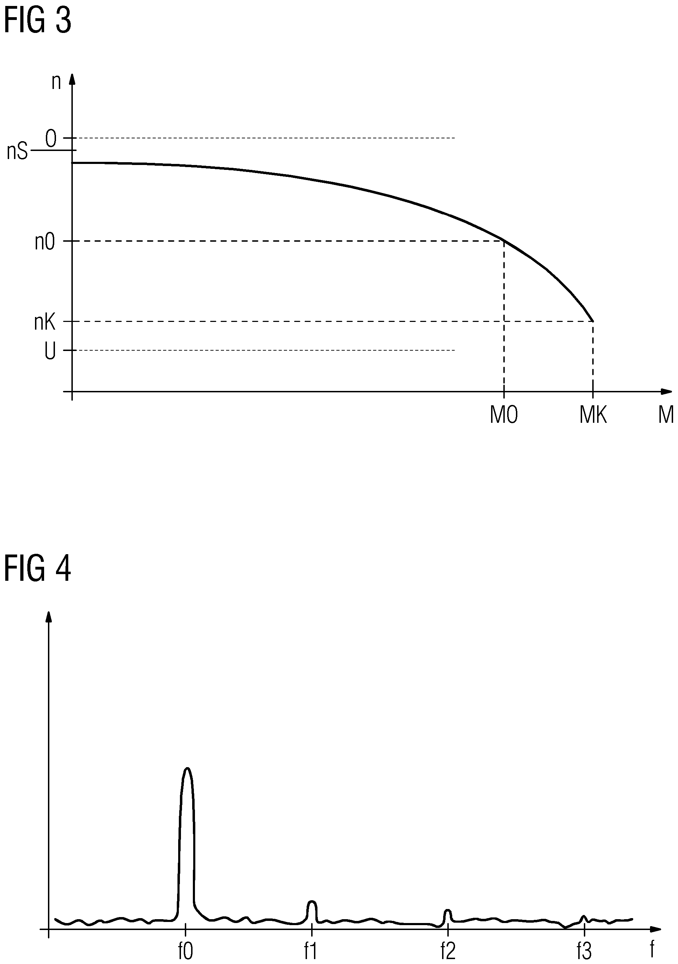

Die elektrische Maschine 1 kann insbesondere als Asynchronmaschine ausgebildet sein. Dies ist anhand von FIG 3 erkennbar, welche die Drehzahl n der elektrischen Maschine 1 als Funktion des vom Rotor 2 ausgeübten Moments M zeigt. Ersichtlich ist die Drehzahl n (Einheit: Umdrehungen pro Sekunde) bei konstanter Speisefrequenz fF umso geringer, je größer das ausgeübte Moment M ist. Überschreitet das Moment M ein sogenanntes Kippmoment MK, ist die elektrische Maschine 1 nicht mehr in der Lage, den Rotor 2 zu drehen. Unterhalb des Kippmoments MK ist die Drehzahl n - in der Regel nur geringfügig - kleiner als eine Synchrondrehzahl nS. Die Synchrondrehzahl nS ist direkt durch die Polpaarzahl p und die Speisefrequenz fF bestimmt. Insbesondere gilt stets die Beziehung

$$nS \cdot p = fF \tag{1}$$

Am Stator 3 der elektrischen Maschine 1 - beispielsweise an einem der Lager 5 oder entsprechend der Darstellung in FIG 1 in dessen Nähe, insbesondere an oder in einem Lagerschild der elektrischen Maschine 1 - ist ein Schwingungssensor 10 angeordnet. Der Schwingungssensor 10 kann beispielsweise als üblicher Beschleunigungssensor ausgebildet sein. Unabhängig von seiner konkreten Ausbildung generiert der Schwingungssensor 10 ein Vibrationssignal S. Das Vibrationssignal S ist ein elektrisches Signal. Es ist charakteristisch für eine mechanische Schwingung (Vibration) des Stators 3. Es weist - siehe FIG 4 - ein Spektrum auf, das eine Grundfrequenz f0 und gegebenenfalls auch Oberschwingungen f1, f2 usw. umfasst. Die mechanische Schwingung des Stators 3 wird oftmals durch eine - wenn auch nur geringe, in der Praxis aber nicht völlig vermeidbare - Unwucht des Rotors 2 hervorgerufen. Aber auch eine Anregung durch andere Ursachen ist möglich, beispielsweise aufgrund einer nicht idealen Ausrichtung von Achsen eines Antriebsstrangs es oder ähnliche im perfekte Randbedingungen. Je nach Lage des Einzelfalls können gegebenenfalls auch ausschließlich Oberschwingungen f1, f2 usw. angeregt werden.

Im Einzelfall ist es auch möglich, dass - beispielsweise aufgrund einer Übersetzung durch ein Getriebe, einen Riemenantrieb oder Ähnliches - weitere Faktoren berücksichtigt werden müssen. Derartige Sachverhalte können aufgrund theoretischer Ermittlungen oder aufgrund von Versuchen festgestellt werden. In manchen Fällen ist ein Übersetzungsverhältnis ganzzahlig. In diesen Fällen ist das resultierende Spektrum nur geringfügig verzerrt. Im Falle von Getrieben und dergleichen liegen jedoch oftmals "krumme" Übersetzungsverhältnisse vor, beispielsweise bei einem einfachen Getriebe ein Zahnrad mit 17 Zähnen, das mit einem Zahnrad mit 43 Zähnen kämmt. Auch in derartigen Fällen kann das Spektrum jedoch erfasst werden, und zwar entweder nur zeitweise, wenn es besonders stark ist, oder über eine hinreichend lange Zeit.

Die elektrische Maschine 1 weist weiterhin eine Auswertungseinrichtung 11 auf. Die Auswertungseinrichtung 11 nimmt das Vibrationssignal S entgegen. Die Auswertungseinrichtung 11 wertet den zeitlichen Verlauf des Vibrationssignals S aus. Sie ermittelt insbesondere anhand des zeitlichen Verlaufs des Vibrationssignals S die Grundfrequenz f0 des Vibrationssignals S und anhand der Grundfrequenz f0 die Drehzahl n des Rotors 2.

Für die Ermittlung der Grundfrequenz f0 sind verschiedene Möglichkeiten gegeben. Die meisten dieser Möglichkeiten erfordern eine Auswertung des Vibrationssignals S über mehrere Perioden der Speisefrequenz fF, meist sogar über mehrere Perioden der Synchronfrequenz fS (die vom Betrag her mit der Synchrondrehzahl nS übereinstimmt). Beispielsweise ist es möglich, eine Fouriertransformation des Vibrationssignals S vorzunehmen und sodann in dem dadurch ermittelten Schwingungsspektrum (siehe FIG 4) in einem vorbestimmten Frequenzbereich den signifikanten Peak zu ermitteln. Diese Vorgehensweise ist Fachleuten allgemein bekannt und muss daher nicht näher erläutert werden. Insbesondere in diesem Fall ist es von Vorteil, wenn die Auswertungseinrichtung zunächst anhand der Speisefrequenz fF den Frequenzbereich bestimmt und die Drehzahl n des Rotors 2 dann und nur dann als gültig anerkennt, wenn die Grundfrequenz f des Vibrationssignals S innerhalb des von der Auswertungseinrichtung 11 bestimmten Frequenzbereichs liegt oder wenn innerhalb des vorbestimmten Frequenzbereichs ein hinreichend signifikanter Peak vorliegt.

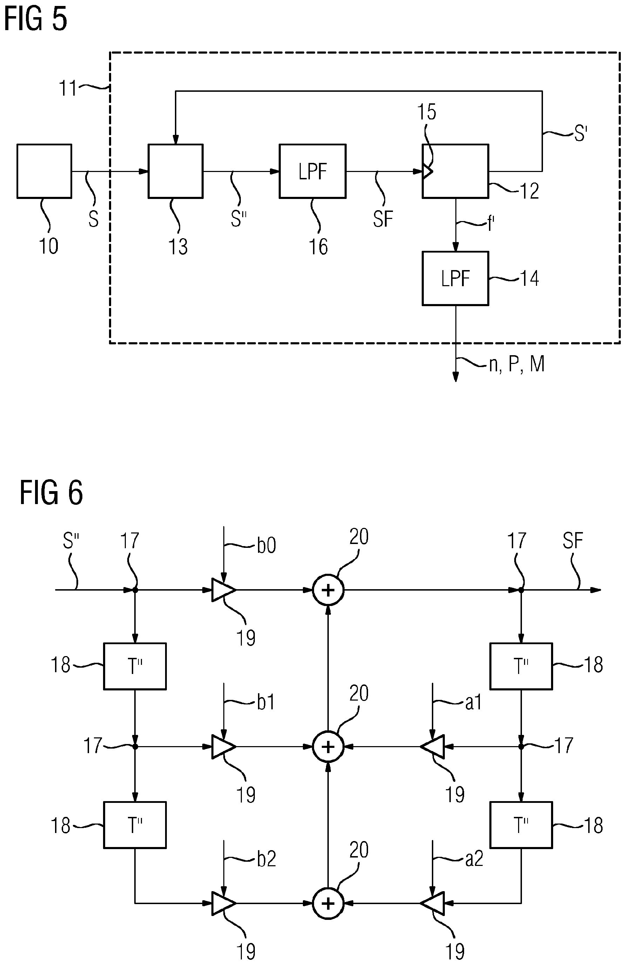

Vorzugsweise wird jedoch so vorgegangen, wie dies nachfolgend in Verbindung mit FIG 5 näher erläutert wird.

Gemäß FIG 5 umfasst die Auswertungseinrichtung 11 einen Oszillator 12, einen Mischer 13 und einen Ermittlungsblock 14. Der Oszillator 12 ist frequenzsteuerbar. Der Oszillator 12 gibt ein Oszillationssignal S' ab. Das Oszillationssignal S' weist entsprechend der Darstellung in FIG 5 eine Oszillationsfrequenz f' auf. Dem Mischer 13 werden sowohl das Vibrationssignal S als auch das Oszillationssignal S' zugeführt. Der Mischer 13 generiert dadurch ein Mischsignal S". Das Mischsignal S" enthält einen Signalanteil mit der Summe von Grundfrequenz f0 und Oszillationsfrequenz f' und einen Signalanteil mit der Differenz von Grundfrequenz f0 und Oszillationsfrequenz f'. Der Aufbau und die Wirkungsweise derartiger Mischer 13 sind Fachleuten allgemein bekannt. Auch Realisierungen in Software sind Fachleuten allgemein bekannt. Die Auswertungseinrichtung 11 führt die Oszillationsfrequenz f' anhand des Signalanteils mit der Differenz von Grundfrequenz f und Oszillationsfrequenz f' nach, so dass die Oszillationsfrequenz f' der Grundfrequenz f0 angeglichen wird. Diese Vorgehensweise ist Fachleuten unter den Begriffen PLL (phase locked loop) und FLL (frequency locked loop) allgemein bekannt.

Die Oszillationsfrequenz f' wird dem Ermittlungsblock 14 zugeführt. Der Ermittlungsblock 14 ermittelt sodann anhand der Oszillationsfrequenz f' des Oszillationssignals S' die Drehzahl n des Rotors 2. In manchen Fällen kann die Auswertungseinrichtung 11 die Oszillationsfrequenz f' 1:1 als Drehzahl n übernehmen. In anderen Fällen ist eine Skalierung mit einem Faktor erforderlich. Zur Gewährleistung eines stabilen Ergebnisses kann es jedoch sinnvoll sein, den Ermittlungsblock 14 entsprechend der Darstellung in FIG 5 als Tiefpassfilter auszubilden. In diesem Fall nimmt die Auswertungseinrichtung 11 zur Ermittlung der Drehzahl n des Rotors 2 eine Tiefpassfilterung der Oszillationsfrequenz f' vor.

Alternativ oder zusätzlich kann die Auswertungseinrichtung 11 - siehe FIG 3 - zunächst ausgehend von der Speisefrequenz fF einen Frequenzbereich bestimmen. Im einfachsten Fall kann die Auswertungseinrichtung 11 zunächst die mit der Synchrondrehzahl nS korrespondierende Synchronfrequenz fS bestimmen. Sodann kann die Auswertungseinrichtung 11, ausgehend von der Synchronfrequenz fS, als Obergrenze O des Frequenzbereichs die Synchronfrequenz fS oder, wie in FIG 3 erkennbar ist, eine etwas größere obere Grenzfrequenz bestimmen und als Untergrenze U eine Frequenz bestimmen, die zur Synchronfrequenz fS in einem Verhältnis x steht, wobei x ein Wert geringfügig kleiner als 1 ist. In diesem Fall ist es möglich, dass die Auswertungseinrichtung 11 die zunächst ermittelte Drehzahl n dann und nur dann als gültig anerkennt, wenn die Grundfrequenz f des Vibrationssignals S (bzw. die entsprechend nachgeführte Oszillationsfrequenz f') innerhalb des von der Auswertungseinrichtung 11 bestimmten Frequenzbereichs liegt. Beispielsweise ist es möglich, dass die Auswertungseinrichtung 11 die Oszillationsfrequenz f' nur so lange nachführt, wie die Oszillationsfrequenz f' innerhalb des so definierten Frequenzbereichs liegt, und anderenfalls auf einen Fehlerfall erkennt. Auch ist es möglich, dass die Auswertungseinrichtung 11 die Oszillationsfrequenz f' zwar auch über den so definierten Frequenzbereich hinaus nachführt, aber auf einen Fehlerfall erkennt, wenn die Oszillationsfrequenz f' nach dem Nachführen außerhalb des genannten Frequenzbereichs liegt. Ebenso ist es auch möglich, dass die Auswertungseinrichtung 11 permanent prüft, ob in dem vorbestimmten Frequenzbereich ein Schwingungssignal oberhalb einer vorbestimmten Schwelle auftritt. In diesem Fall ist eine robuste Erkennung der Drehzahl auch dann möglich, wenn die Schwingung mit einer relativ niedrigen Frequenz moduliert wird (Schwebung), so dass zeitweise ein hinreichend hohes Vibrationssignal vorliegt und zeitweise nur ein zu niedriges Vibrationssignal vorliegt.

Ebenso ist es in ähnlicher Weise in manchen Fällen möglich, einem Steuereingang 15 des Oszillators 12, über den die Oszillatorfrequenz f' nachgeführt wird, direkt das Mischsignal S" zuzuführen. In der Regel ist es jedoch von Vorteil, aus dem Mischsignal S" entsprechend der Darstellung in FIG 5 zuvor den Signalanteil mit der Summe von Grundfrequenz f und Oszillationsfrequenz f' auszufiltern, so dass dem Steuereingang 15 nur der Signalanteil mit der Differenz von Grundfrequenz f und Oszillationsfrequenz f' zugeführt wird. In diesem Fall umfasst die Auswertungseinrichtung zusätzlich ein Tiefpassfilter 16. In dem Tiefpassfilter 16 nimmt die Auswertungseinrichtung 11 eine Tiefpassfilterung des Mischsignals S" vor. Die Auswertungseinrichtung 11 führt in diesem Fall dem Steuereingang 15 das tiefpassgefilterte Mischsignal zu, in FIG 5 mit dem Bezugszeichen SF bezeichnet.

Die Ausgestaltung des Tiefpassfilters 16 kann nach Bedarf sein. Nachfolgend wird in Verbindung mit FIG 6 eine bevorzugte Ausgestaltung des Tiefpassfilters 16 erläutert.

Gemäß FIG 6 ist das Tiefpassfilter 16 als Biquadfilter ausgebildet. Es nimmt also eine Biquadfilterung vor. Das Tiefpassfilter 16 weist im Falle der Ausgestaltung als Biquadfilter Knotenpunkte 17, Verzögerungsglieder 18, Verstärkerelemente 19 und Additionspunkte 20 auf. Der strukturelle Aufbau des Tiefpassfilters 16 und der Signalfluss sind anhand der dargestellten Struktur und der in FIG 6 eingezeichneten Pfeile ersichtlich. Das Tiefpassfilter 16 von FIG 6 arbeitet getaktet. Ein Arbeitstakt T" ist erheblich kleiner - in der Regel mindestens eine Größenordnung kleiner - als die mit der Synchronfrequenz fS = fF/p (mit p = Polpaarzahl der elektrischen Maschine 1) korrespondierende Periode. Die Knotenpunkte 17 führen das ihnen jeweils zugeführte Signal den ihnen im Signalfluss nachfolgenden Elementen zu. Die Verzögerungsglieder 18 verzögern das ihnen jeweils zugeführte Signal um einen (1) Arbeitstakt T". Die Verstärkerelemente 19 verstärken das ihnen jeweils zugeführte Signal mit einem jeweiligen Verstärkungsfaktor a1, a2, b0, b1, b2. Die Additionspunkte 20 addieren die ihnen jeweils zugeführten Signale.

Die Verstärkungsfaktoren a1, a2, b0, b1, b2 müssen selbstverständlich geeignet gewählt sein. Hierbei können je nach Lage des Einzelfalls die Verstärkungsfaktoren a1, a2, b0, b1, b2 derart bestimmt sein, dass das Tiefpassfilter 16 ein schnelles Konvergenzverhalten zeigt oder dass das Tiefpassfilter 16 eher stabil ist. Die Festlegung der Verstärkungsfaktoren a1, a2, b0, b1, b2 ist Fachleuten allgemein bekannt und vertraut.

Falls die Ermittlungseinrichtung 14 ebenfalls als Tiefpassfilter ausgebildet ist, kann sie in analoger Weise ausgestaltet sein wie das Tiefpassfilter 16. Die Verstärkungsfaktoren a1, a2, b0, b1 und b2 der Ermittlungseinrichtung 14 können in diesem Fall die gleichen Werte wie oder andere Werte als die Verstärkungsfaktoren a1, a2, b0, b1 und b2 des Tiefpassfilters 16 aufweisen.

Die weitergehende Verwertung der ermittelten Drehzahl n kann nach Bedarf ausgestaltet sein. Beispielsweise kann die Auswertungseinrichtung 11 anhand der Drehzahl n weitere Größen ableiten und ermitteln, insbesondere das von dem Rotor 2 ausgeübte Moment M und/oder die von der elektrischen Maschine 1 aufgenommene elektrische Leistung P bzw. die von der elektrischen Maschine 1 abgegebene mechanische Leistung P. Nachfolgend wird zwischen der von der elektrischen Maschine 1 aufgenommenen elektrischen Leistung P und der von der elektrischen Maschine 1 abgegebenen mechanischen Leistung P nicht unterschieden und auch das gleiche Bezugszeichen verwendet. Dies ist gerechtfertigt, weil der Wirkungsgrad größerer elektrischer Maschinen 1 im Regelfall weit über 90% liegt, meist bei ca. 95%, in manchen Fällen sogar bei 98% bis 99,5%, und es im Rahmen der vorliegenden Erfindung nur auf die ungefähre Leistung ankommt, nicht auf die exakte Leistung.

Zum Ermitteln des Moments M kann beispielsweise die Kennlinie von FIG 3 - also die funktionale Beziehung zwischen Moment M und Drehzahl n - in der Auswertungseinrichtung 11 hinterlegt sein. Alternativ ist es möglich, dass der Auswertungseinrichtung 11 beispielsweise für das Kippmoment MK oder ein anderes Referenzmoment M0 (siehe FIG 3) die zugehörigen Drehzahlen nK (Kippdrehzahl) bzw. n0 (Referenzdrehzahl) und damit auch der zugehörige Schlupf sK bzw. s0 bekannt sind. Der Schlupf sK bzw. s0 ist wie folgt definiert:

$$sK = \frac{nS - nK}{nS} \qquad (2)$$

$$s0 = \frac{nS - n0}{nS} \qquad (3)$$

In diesem Fall kann die Auswertungseinrichtung 11 das Moment M nach der sogenannten Kloßschen Formel ermitteln:

$$\frac{M}{MK} = \frac{2}{\dfrac{s}{sK} + \dfrac{sK}{s}} \qquad (4)$$

$$\frac{M}{M0} = \frac{2}{\dfrac{s}{s0} + \dfrac{s0}{s}} \qquad (5)$$

Der Schlupf s ergibt sich hierbei zu

$$s = \frac{nS - n}{nS} \qquad (6)$$

Die Leistung P ergibt sich direkt als Produkt der ermittelten Drehzahl n und des ermittelten Moments M.

Soweit erforderlich kann die Auswertungseinrichtung 11 im Rahmen der Ermittlung der abgeleiteten Größen weiterhin weitere Betriebsgrößen T, T', L der elektrischen Maschine 1 berücksichtigen. Bei diesen Betriebsgrößen kann es sich beispielsweise um die Temperatur T der elektrischen Maschine 1, die Temperatur T' in der Umgebung der elektrischen Maschine 1 und/oder einen Schmierungszustand L der elektrischen Maschine 1 handeln.

Es ist möglich, dass die Auswertungseinrichtung 11 die Drehzahl n und/oder die abgeleiteten Größen M, P nur dann ermittelt, wenn ihr von einem Bediener - beispielsweise über eine Steuereinrichtung oder über eine App - ein entsprechender Befehl vorgegeben wird. In diesem Fall kann die Auswertungseinrichtung 11 die ermittelten Größen n, M, P - wieder über die Steuereinrichtung oder über die App - direkt an den Bediener ausgeben. Ein Speichern ist in diesem Fall zwar möglich, aber nicht unbedingt erforderlich. Alternativ kann die Auswertungseinrichtung 11 die ermittelte Drehzahl n und/oder die anhand der ermittelten Drehzahl n abgeleiteten Größen M, P intern im Sinne einer Historie abspeichern. Auch ist es möglich, dass die Auswertungseinrichtung 11 die ermittelte Drehzahl n und/oder die anhand der ermittelten Drehzahl n abgeleiteten Größen M, P entsprechend der Darstellung in FIG 2 über eine Anbindung an ein Rechnernetz 21 - beispielsweise ein LAN oder das Internet - an einen Rechner 22 übermittelt. Der Rechner 22 kann beispielsweise in einer Cloud angeordnet sein und/oder ein Server sein. Die interne Abspeicherung im Sinne einer Historie und die Übermittlung an den Rechner 22 sind unabhängig davon realisierbar, ob die Auswertungseinrichtung 11 die entsprechende Ermittlung aufgrund einer expliziten Anforderung von außen (beispielsweise durch den Bediener) oder periodisch bzw. permanent vornimmt.

Zusammengefasst betrifft die vorliegende Erfindung somit folgenden Sachverhalt:

Eine rotatorische elektrische Maschine 1 wird mit einer vorbekannten Speisefrequenz fF mit elektrischer Energie versorgt. Eine Auswertungseinrichtung 11 nimmt ein Vibrationssignal S entgegen, das mittels eines an einem Stator 3 der elektrischen Maschine 1 angeordneten Schwingungssensors 10 generiert wird. Die Auswertungseinrichtung 11 ermittelt anhand des zeitlichen Verlaufs des Vibrationssignals S eine Grundfrequenz f des Vibrationssignals S und anhand der Grundfrequenz f0 des Vibrationssignals S die Drehzahl n eines Rotors 2 der elektrischen Maschine 1.

Die vorliegende Erfindung weist viele Vorteile auf. So können insbesondere die Drehzahl n und bei Bedarf auch das Moment M und/oder die Leistung P auf einfache und zuverlässige Weise ermittelt werden. Ein relativ teurer Drehzahlgeber und ein noch teurerer Momentgeber sind nicht erforderlich. Die Ermittlung ist zuverlässig und robust gegen Störungen. Der Schwingungssensor 10 ist vielfach aus anderen Gründen bereits vorhanden, so dass lediglich sein Vibrationssignal S ausgewertet werden muss.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.    Ermittlungsverfahren für eine Drehzahl (n) eines Rotors (2) einer rotatorischen elektrischen Maschine (1), die mit einer vorbekannten Speisefrequenz (fF) mit elektrischer Energie versorgt wird,

-    wobei eine Auswertungseinrichtung (11) ein mittels eines an einem Stator (3) der elektrischen Maschine (1) angeordneten Schwingungssensors (10) generiertes Vibrationssignal (S) entgegennimmt,
-    wobei die Auswertungseinrichtung (11) anhand des zeitlichen Verlaufs des Vibrationssignals (S) eine Grundfrequenz (f0) des Vibrationssignals (S) ermittelt und
-    wobei die Auswertungseinrichtung (11) anhand der Grundfrequenz (f0) des Vibrationssignals (S) die Drehzahl (n) des Rotors (2) ermittelt.

2.    Ermittlungsverfahren nach Anspruch 1,
**dadurch gekennzeichnet,**
**dass** die Auswertungseinrichtung (11) anhand der Speisefrequenz (fF) einen Frequenzbereich bestimmt und dass die Auswertungseinrichtung (11) die Drehzahl (n) des Rotors (2) dann und nur dann als gültig anerkennt, wenn die Grundfrequenz (f0) des Vibrationssignals (S) innerhalb des von der Auswertungseinrichtung (11) bestimmten Frequenzbereichs liegt.

3.    Ermittlungsverfahren nach Anspruch 1 oder 2,
**dadurch gekennzeichnet,**
**dass** die Auswertungseinrichtung (11) die ermittelte Drehzahl (n) des Rotors (2) und/oder eine unter Verwertung der Drehzahl (n) ermittelte abgeleitete Größe (M, P) der elektrischen Maschine (1) über eine Anbindung an ein Rechnernetz (21) an einen Rechner (22) übermittelt.

4.    Ermittlungsverfahren nach Anspruch 1, 2 oder 3,
**dadurch gekennzeichnet,**
**dass** die Auswertungseinrichtung (11) anhand der Drehzahl (n) des Rotors (2) als abgeleitete Größe (M, P) der elektrischen Maschine (1) ein von dem Rotor (2) ausgeübtes Drehmoment (M) und/oder eine von der elektrischen Maschine (1) aufgenommene elektrische Leistung oder eine von der elektrischen Maschine (1) abgegebene mechanische Leistung (P) ermittelt.

5.    Ermittlungsverfahren nach Anspruch 4,
**dadurch gekennzeichnet,**
**dass** die Auswertungseinrichtung (11) im Rahmen der Ermittlung der abgeleiteten Größe (M, P) weitere Betriebsgrößen (T, T', L) der elektrischen Maschine (1) berücksichtigt.

6.    Ermittlungsverfahren nach einem der obigen Ansprüche,
**dadurch gekennzeichnet,**

-    **dass** die Auswertungseinrichtung (11) zum Ermitteln der Grundfrequenz (f0) des Vibrationssignals (S) das Vibrationssignal (S) und ein von einem frequenzsteuerbaren Oszillator (12) abgegebenes, eine Oszillationsfrequenz (f') aufweisendes Oszillationssignal (S') zu einem Mischsignal (S") mischt, welches einen Signalanteil mit der Summe von Grundfrequenz (f0) und Oszillationsfrequenz (f') und einen Signalanteil mit der Differenz von Grundfrequenz (f0) und Oszillationsfrequenz (f') enthält,
-    **dass** die Auswertungseinrichtung (11) die Oszillationsfrequenz (f') anhand des Signalanteils mit der Differenz von Grundfrequenz (f0) und Oszillationsfrequenz (f') nachführt, so dass die Oszillationsfrequenz (f') der Grundfrequenz (f0) des Vibrationssignals (S) angeglichen wird, und

- **dass** die Auswertungseinrichtung (11) die Drehzahl (n) des Rotors (2) anhand der Oszillationsfrequenz (f') des Oszillationssignals (S') ermittelt.

7. Ermittlungsverfahren nach Anspruch 6,
   **dadurch gekennzeichnet,**
   **dass** die Auswertungseinrichtung (11) eine Tiefpassfilterung des Mischsignals (S") vornimmt und dass die Auswertungseinrichtung (11) einem Steuereingang (15) des Oszillators (12), über den die Oszillationsfrequenz (f') nachgeführt wird, das tiefpassgefilterte Mischsignal (SF) zuführt.

8. Ermittlungsverfahren nach Anspruch 7,
   **dadurch gekennzeichnet,**
   **dass** die Tiefpassfilterung, mittels derer die Auswertungseinrichtung (11) das Mischsignal (S") tiefpassfiltert, eine Biquadfilterung ist.

9. Ermittlungsverfahren nach Anspruch 6, 7 oder 8,
   **dadurch gekennzeichnet,**
   **dass** die Auswertungseinrichtung (11) zur Ermittlung der Drehzahl (n) des Rotors (2) eine Tiefpassfilterung der Oszillationsfrequenz (f') vornimmt.

10. Ermittlungsverfahren nach Anspruch 9,
    **dadurch gekennzeichnet,**
    **dass** die Tiefpassfilterung, mittels derer die Auswertungseinrichtung (11) die Oszillationsfrequenz (f') tiefpassfiltert, eine Biquadfilterung ist.

11. Auswertungseinrichtung zur Ermittlung einer Drehzahl (n) eines Rotors (2) einer rotatorischen elektrischen Maschine (1), die mit einer vorbekannten Speisefrequenz (fF) mit elektrischer Energie versorgt wird, wobei die Auswertungseinrichtung derart ausgebildet ist, dass sie im Betrieb ein Ermittlungsverfahren nach einem der obigen Ansprüche ausführt.

12. Rotatorische elektrische Maschine, insbesondere Asynchronmaschine,

    - wobei die elektrische Maschine einen Rotor (2) und einen Stator (3) aufweist,
    - wobei die elektrische Maschine mit einer vorbekannten Speisefrequenz (fF) mit elektrischer Energie versorgt wird,
    - wobei am Stator (3) der elektrischen Maschine ein Schwingungssensor (10) angeordnet ist, mittels dessen ein Vibrationssignal (S) generiert wird,
    - wobei die elektrische Maschine eine Auswertungseinrichtung (11) nach Anspruch 11 aufweist, die das von dem Schwingungssensor (10) generierte Vibrationssignal (S) entgegennimmt, anhand des zeitlichen Verlaufs des Vibrationssignals (S) eine Grundfrequenz (f0) des Vibrationssignal (S) ermittelt und anhand der Grundfrequenz (f0) des Vibrationssignals (S) eine Drehzahl (n) des Rotors (2) ermittelt.

## FIG 1

## FIG 2

FIG 3

FIG 4

## FIG 5

## FIG 6

**Europäisches Patentamt**
**European Patent Office**
**Office européen des brevets**

## EUROPÄISCHER RECHERCHENBERICHT

**Nummer der Anmeldung**

EP 18 19 1133

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/017604 A1 (DAW EDWARD JOHN [GB] ET AL) 18. Januar 2018 (2018-01-18) | 1-3,11,12 | INV. H02P23/22 F04D29/66 |
| Y | * Absätze [0136], [0169], [0056], [0090], [0183]; Abbildung 15 * | 4-10 | |
| | ----- | | |
| X | DE 10 2009 022107 A1 (KSB AG [DE]) 25. November 2010 (2010-11-25) | 1-5,11,12 | |
| Y | * Absätze [0030], [0013] * | 4,5 | |
| | ----- | | |
| Y | ZHENZHONG SU ET AL: "A novel method to synchronize with vibration signals of magnetically suspended flywheel rotor based on single-phase SRF-PLL", 2015 CHINESE AUTOMATION CONGRESS (CAC), IEEE, 27. November 2015 (2015-11-27), Seiten 1620-1626, XP032850688, DOI: 10.1109/CAC.2015.7382761 [gefunden am 2016-01-13] * Abbildung 1 * | 6,7 | |
| | ----- | | **RECHERCHIERTE SACHGEBIETE (IPC)** |
| Y | UPHUES ANDREAS ET AL: "Frequency adaptive PR-controller for compensation of current harmonics", IECON 2014 - 40TH ANNUAL CONFERENCE OF THE IEEE INDUSTRIAL ELECTRONICS SOCIETY, IEEE, 29. Oktober 2014 (2014-10-29), Seiten 2103-2108, XP032739047, DOI: 10.1109/IECON.2014.7048792 [gefunden am 2015-02-24] * Absatz [00II] * | 8-10 | H02P F04D |
| | ----- | | |
| X | US 2003/229469 A1 (SONG LIMIN [US]) 11. Dezember 2003 (2003-12-11) * Abbildung 2 * | 1,11,12 | |
| | ----- | | |
| X | WO 2015/197141 A1 (GRUNDFOS HOLDING AS [DK]) 30. Dezember 2015 (2015-12-30) * Seite 15 * | 1,11,12 | |
| | ----- | | |

Der vorliegende Recherchenbericht wurde für alle Patentansprüche erstellt

| Recherchenort | Abschlußdatum der Recherche | Prüfer |
|---|---|---|
| München | 8. Februar 2019 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 1133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2019

| Im Recherchenbericht angeführtes Patentdokument | Datum der Veröffentlichung | Mitglied(er) der Patentfamilie | Datum der Veröffentlichung |
|---|---|---|---|
| US 2018017604    A1 | 18-01-2018 | EP       3256866 A1<br>GB       2537802 A<br>US    2018017604 A1<br>WO    2016128775 A1 | 20-12-2017<br>02-11-2016<br>18-01-2018<br>18-08-2016 |
| DE 102009022107 A1 | 25-11-2010 | BR       PI1007672 A2<br>CN       102439318 A<br>DE 102009022107 A1<br>DK       2433010 T3<br>EP       2433010 A1<br>ES       2556236 T3<br>HR       P20151394 T1<br>HU       E028262 T2<br>JP       5868846 B2<br>JP    2012527563 A<br>PT       2433010 E<br>RU    2011151763 A<br>SI       2433010 T1<br>US    2012111114 A1<br>WO    2010133425 A1 | 02-08-2016<br>02-05-2012<br>25-11-2010<br>21-12-2015<br>28-03-2012<br>14-01-2016<br>12-02-2016<br>28-12-2016<br>24-02-2016<br>08-11-2012<br>26-01-2016<br>10-07-2013<br>29-01-2016<br>10-05-2012<br>25-11-2010 |
| US 2003229469    A1 | 11-12-2003 | KEINE | |
| WO 2015197141    A1 | 30-12-2015 | CN       107076155 A<br>CN       107076157 A<br>EP       3207256 A1<br>EP       3207258 A1<br>US    2017241422 A1<br>US    2017248142 A1<br>WO    2015197141 A1<br>WO    2016059112 A1 | 18-08-2017<br>18-08-2017<br>23-08-2017<br>23-08-2017<br>24-08-2017<br>31-08-2017<br>30-12-2015<br>21-04-2016 |

EPO FORM P0461

Für nähere Einzelheiten zu diesem Anhang : siehe Amtsblatt des Europäischen Patentamts, Nr.12/82